# EUROPÄISCHE PATENTSCHRIFT

(11) **EP 0 671 424 B1**
(45) Veröffentlichungstag und Bekanntmachung des Hinweises auf die Patenterteilung: **30.12.1998**
(21) Anmeldenummer: 95102674.9
(22) Anmeldetag: 24.02.1995
(51) Int. Cl.: C08G 18/48, C08G 18/08, C08G 63/668

(54) **Verfahren zur Herstellung höherfunktioneller, hydroxylgruppenhaltiger Polyetherpolyole**
Process for the preparation of higher functional, hydroxyl groups containing polyetherpolyols
Procédé de préparation de polyétherpolyoles à plus forts taux en fonctions

(30) Priorität: 09.03.1994 DE 4407904
(43) Veröffentlichungstag der Anmeldung: 13.09.1995
(73) Patentinhaber: BAYER AG, 51368 Leverkusen (DE)
(72) Erfinder: Gupta, Pramod, Dr., D-50181 Bedburg (DE); Gebauer, Herbert, Dr., D-47829 Krefeld (DE); Sandhagen, Hans-Joachim, Dr., D-41540 Dormagen (DE)

(56) Entgegenhaltungen:
- EP-A- 0 055 449
- EP-A- 0 599 561
- US-A- 3 919 172
- US-A- 4 242 490

## Beschreibung

Die Erfindung betrifft höherfunktionelle, hydroxylgruppenhaltige, modifizierte Polyetherpolyole mit geringem Doppelbindungsgehalt.

Polyetherpolyole sind erhältlich duch die Polyaddition von Alkylenoxiden wie z.B. Ethylenoxid, Propylenoxid, Butylenoxid, an aktive Wasserstoffatome aufweisende Verbindungen (Startverbindungen) wie z.B. Alkohole, Amine, Säureamide, Phenole und werden u.a. zur Herstellung von Polyurethan-Kunststoffen, Tensiden und Schmierstoffen verwendet.

Die Polyaddition von Epoxiden an Startverbindungen erfolgt üblicherweise unter Alkalikatalyse.

Die überwiegend angewandten Alkali-Katalysatoren sind Alkalihydroxide. Die so erhaltenen Polyetherpolyole sind jedoch durch monofunktionelle Polyether mit endständigen Doppelbindungen verunreinigt. Diese werden gebildet durch die Umlagerung von Epoxiden, beispielsweise Propylenoxid zu Allyl- bzw. Propenylalkoholen, welche dann ihrerseits als Starter für weitere alkalikatalysierte Polyaddition fungieren können. Ethylenoxid führt in analoger Reaktionsweise zu monofunktionellen Ethern mit endständiger Vinyletherstruktur.

Der Anteil an monofunktionellen Polyethern erhöht sich nur mit zunehmender Kettenlänge bzw. abfallender OH-Zahl der hergestellten Polyether. Aus diesem Grunde ist es nahezu unmöglich, Polyether, bei denen die einzelnen Polyetherketten Molekulargewichte von 2 000 bis 2 500 erreichen, aus Startverbindungen und Propylenoxid frei von monofunktionellen Polyethern mit endständigen Doppelbindungen herzustellen.

Der höhere Gehalt an monofunktionellen Polyethern erniedrigt die gewünschte Funktionalität des Polyethers, in dem er als verfahrensbedingte Verunreinigung enthalten ist. So ist beispielsweise bei der Herstellung von Polyurethanelastomeren ein Verlust an Funktionalität nicht wünschenswert. Generell kann gesagt werden, daß beispielsweise beim Polyurethanpolyadditionsverfahren monofunktionelle Anteile von Nachteil sind, da sie als Kettenabbrecher wirken. Es ist aus der Literatur bekannt, daß Polyetherpolyole, die durch die Verwendung von Metall-Cyanid-Komplexen als Katalysator (US-P 4 985 491) hergestellt werden, sehr niedrige Gehalte an monofunktionellen Polyethern mit endständigen Doppelbindungen aufweisen. Dieses Verfahren erlaubt auch die Herstellung von Polyetherpolyolen mit höheren Molekulargewichten als das alkalikatalysierte Verfahren.

Ein Nachteil des oben erwähnten Verfahrens mit Metall-Cyanid-Katalysator ist, daß die Ethylenoxidaddition nicht zufriedenstellend durchzuführen ist (EP-A 0 406 440 S. 3, Zeile 24-27) und die Entfernung sowie die Entsorgung des Katalysators kann sich aufwendig gestalten.Über die Entfernung von Metall-Cyanid-Katalysatoren aus dem Reaktionsgemisch gibt es zahlreiche Veröffentlichungen.

In EP-A 0 369 487 wird die Verwendung von barium- und strontiumhaltigen Katalysatoren für die Herstellung von Polyetherpolyolen mit niedrigen Doppelbindungsgehalten empfohlen. Das Arbeiten mit diesen Katalysatoren ist sehr aufwendig und dadurch unwirtschaftlich. Auch die Entfernung des Katalysators kann problematisch sein. Es war daher die Aufgabe der vorliegenden Erfindung, ein Verfahren zur Herstellung von Polyetherpolyolen zu entwickeln, das die obengenannten Nachteile vermeidet.

Gegenstand der Erfindung ist ein Verfahren zur Herstellung von hydroxylgruppenhaltigen, durch Urethan- oder Estergruppen modifizierten Polyetherpolyolen mit einer Funktionalität von 2 bis 10, einem Molekulargewicht von 2.000 bis 32.000, einem Doppelbindungsgehalt von max. 76 mmol/kg und einer OH-Zahl von 10 - 80, dadurch gekennzeichnet, daß man n mol eines Ausgangspolyetherpolyols mit einer Funktionalität von 2 bis 8 und einer OH-Zahl von 28 - 400, ggf. in Gegenwart von Katalysatoren, mit mmol mindestens einer gegenüber Hydroxylgruppen reaktive Gruppen aufweisenden Verbindung der Funktionalität von 2 bis 3, ausgewählt aus:
a) Polyisocyanaten und
b) Polycarbonsäuren oder deren Anhydriden
bei 40 bis 200°C umsetzt, mit der Maßgabe, daß n und m so gewählt werden, daß sich für das modifizierte Polyetherpolyol die Funktionalität von 2 bis 10 einstellt.

Erfindungsgemäß bevorzugt ist, daß
- die mindestens eine gegenüber Hydroxylfunktionen reaktive Gruppen aufweisenden Verbindungen
   a) Di- oder Triisocyanate
   b) Di- oder Tricarbonsäuren
   sind,
- die Ausgangspolyetherpolyole der Funktionalität 2 bis eine OH-Zahl zwischen 28 und 200 aufweisen,
- die Reaktion des Ausgangspolyetherpolyols mit den gegenüber Hydroxylfunktionen reaktive Gruppen aufweisenden Verbindungen
   a) bei 40 bis 150°C, bevorzugt 60 bis 120°C (bei Polyisocyanaten),
   b) bei 120 bis 200°C, bevorzugt 130 bis 180°C (bei Polycarbonsäuren),
   durchgeführt wird,
- die Reaktion der Ausgangspolyetherpolyole mit Polyisocyanaten a) sowohl diskontinuierlich in einem Reaktionsbehälter als auch kontinuierlich in einem Rohrreaktor durchgeführt wird, wobei das Ausgangspolyetherpolyol und das Polyisocyanat getrennt in den Rohrreaktor eingespeist werden, dem ein statischer Mischer vorgeschaltet ist.

Als Ausgangspolyether kommen in Frage die Alkoxylierungsprodukte von Startverbindungen mit Molekulargewichten bis 400 und 2 bis 8 Hydroxyl-, Thiol- und/oder Aminogruppen. Beispielhaft seien genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Wasser, Methylamin, Ethylamin, Propylamin, Butylamin, Anilin, Benzylamin, o- und p-Toluidin, α,β-Naphthylamin, Ammoniak, Ethylendiamin, Propylendiamin, 1,4-Butylendiamin, 1,2-, 1,3-, 1,4-, 1,5- und 1,6-Hexamethylendiamin, wie o-, mund p-Phenylendiamin, 2,4-, 2,6-Toluylendiamin, 2,2'-, 2,4- und 4,4'-Diaminodiphenylmethan und Diethylendiamin.

Als Epoxide kommen Ethylenoxid, Propylenoxid, Butylenoxid sowie deren Mischungen zum Einsatz.

Der Aufbau der Polyetherketten durch Alkoxylierung kann nur mit einem monomeren Epoxid durchgeführt werden, aber auch statistisch oder auch blockweise mit zwei oder drei unterschiedlichen monomerer Epoxiden erfolgen. Näheres ist in Ullmanns Encyclopädie der industriellen Chemie, englischsprachige Ausgabe, 1992, Band A21, Seiten 670-671, zu entnehmen. Die Ausgangspolyether weisen bevorzugt eine Funktionalität von 2 bis 8 und eine OH-Zahl von 28 bis 400 auf

Als Polyisocyanate a) werden eingesetzt:

Aliphatische, cycloaliphatische, araliphatische, aromatische und heterocyclische Polyisocyanate, wie sie z.B. von W. Siefken in Justus Liebigs Annalen der Chemie, 562, Seiten 75-136, beschrieben werden, beispielsweise solche der Formel

Q(NCO)ₙ,

in der
- n: 2 oder 3
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen,
bedeuten.

Beispielhaft seien genannt:
Hexamethylendiisocyanat (HDI), 1,4-Cyclohexyldiisocyanat und seine Isomeren, Isophorondiisocyanat (IPDI), Dimeryldiisocyanat (Ullmanns Encyclopädie der industriellen Chemie, englischsprachige Ausgabe, 1992, Band A 21, Seite 668 unten), 4,4'-Diisocyanatodicyclohexylmethan und seine Isomeren, 2,4-Toluylendiisocyanat und seine Isomeren (TDI), 4,4'-Methylendiphenyldiisocyanat und seine Isomeren (MDI), 1,5-Naphthalindiisocyanat, Tris-(4-isocyanatotriphenyl)methan oder Gemische derselben untereinander.

Außerdem können als Polyisocyanate verwendet werden:
Die Modifizierungsprodukte der oben aufgeführten Polyisocyanate mit Urethan-, Carbodiimid-, Harnstoff- oder Uretdionstrukturen oder Gemische derselben untereinander.

Als Polycarbonsäuren b) sind organische Polycarbonsäuren mit 2 bis 20 Kohlenstoffatomen, vorzugsweise 2 bis 15 Kohlenstoffatomen und einer Funktionalität von 2 oder 3 einsetzbar.

Beispielhaft seien genannt:
Malonsäure, Bernsteinsäure, Glutarsäure, Adipinsäure, Korksäure, Azelainsäure, Sebacinsäure, Decandicarbonsäure, Maleinsäure, Fumarsäure aber auch Phthalsäure, Isophthalsäure, Terephthalsäure, Hexahydrophthalsäure, Dimerfettsäuren und Trimesinsäure. Die Polycarbonsäuren können dabei sowohl einzeln als auch im Gemisch untereinander verwendet werden. Auch in Form ihrer Anhydride können Polycarbonsäuren in die Reaktion eingesetzt werden. Hier seien Phthalsäureanhydrid und Maleinsäureanhydrid beispielhaft genannt.

Bei den gegebenenfalls mitzuverwendenden Katalysatoren handelt es sich bei Verwendung der Polyisocyanate a) um aus der Polyurethanchemie an sich bekannte tertiäre Amine und/oder Zinnverbindungen, bei Verwendung der Polycarbonsäuren b) um Veresterungskatalysatoren der an sich bekannten Art.

### Durchführung des erfindungsgemäßen Verfahrens

Zur Herstellung der erfindungsgemäßen, höherfunktionellen, hydroxylgruppenhaltigen, modifizierten Polyetherpolyole werden diese mit der gegenüber Hydroxylfunktionen reaktive Gruppen aufweisenden Verbindung, gegebenenfalls in Gegenwart von Katalysatoren, bei 40 bis 200°C umgesetzt.

Diese Reaktion wird insbesondere bei Verwendung von Polyisocyanaten a) bei 40 bis 150°C, bevorzugt 60 bis 120°C, durchgeführt; bei Verwendung von Polycarbonsäuren b) bei 120 bis 200°C, bevorzugt bei 130 bis 180°C.

Die erhaltenen Produkte sind farblose bis leicht gefärbte, dünnflüssige bis hochviskose Flüssigkeiten mit OH-Zahlen von 10 bis 80 und einem rechnerischen Molekulargewicht von 2 000 bis 32 000. Die Ermittlung des Doppelbindungsgehaltes der Polyetherpolyole erfolgt nach ASTM Designation: D 4671-87.

Die erfindungsgemäßen höherfunktionen, hydroxylgruppenhaltigen, modifizierten Polyetherpolyole finden Verwendung in der Herstellung gegebenenfalls zelliger oder massiver Polyurethane wie z.B. Elastomere, Schaumstoffe, Beschichtungen und faserverstärkte Polyurethankunststoffe können aber auch Vorprodukte für Schmierstoffe oder Tenside darstellen.

### Ausführungsbeispiele

Folgende Ausgangspolyether wurden benutzt:

| Polyether | Starter | Charakterisierung der Etherketten (jeweils pro OH-Gruppe des Starters) | OH-Zahl |
|---|---|---|---|
| Polyether A | Propylenglykol | 42 mol Propylenoxid, und 14,7 mol Ethylenoxid | 28 |
| Polyether B | Ethylendiamin | 15,9 mol Propylenoxid | 60 |
| Polyether C | Sorbit | 27,5 mol Propylenoxid, und 7,8 mol Ethylenoxid | 28 |
| Polyether D | Trimethylolpropan | 14,5 mol Propylenoxid, und 3,0 mol Ethylenoxid | 55 |
| Polyether E | Trimethylolpropan | 0,322 mol Propylenoxid | 880 |

Die verwendeten Polyisocyanate a) sind:
- Polyisocyanat 1:: 4,4'-Methylendiphenyldiisocyanat
- Polyisocyanat 2:: 4,4'-Methylendiphenyldiisocyanat mit ca. 50 Gew.-% an 2,4'-Isomerem
- Polyisocyanat 3:: Hexamethylendiisocyanat
- Polyisocyanat 4:: Isophorondiisocyanat.
- Polyisocyanat 5:: 4,4'-Methylendicyclohexyldiisocyanat

Die verwendete Polycarbonsäure b):
Adipinsäure.

Die verwendeten Katalysatoren:
Dibutylzinndilaurat (DBTL)
Methylsulfonsäure.

### Beispiel 1

In einem 1L-Vierhalskolben, versehen mit Rührer, Thermometer, Tropftrichter, Kühler wurden unter Stickstoffatmosphäre:

| | |
|---|---|
| 400,0 g | des Polyethers A und |
| 0,4 g | Dibutylzinndilaurat |
| bei 60°C vorgelegt. Danach wurden bei dieser Temperatur | |
| 8,4 g | des Polyisocyanates 3 |

innerhalb einer Stunde unter Rühren zugegeben. Anschließend wurde das Reaktionsgemisch 20 min bei 120°C gehalten und danach mit einem Wasserbad auf Zimmertemperatur abgekühlt.

Das Produkt wies folgende Werte auf:

| | |
|---|---|
| NCO-Gehalt | = 0,01 % |
| OH-Zahl | = 14 mg KOH/g |
| Viskosität 25°C | = 8081 mPa.s |
| Doppelbindungsgehalt | = 63,0 mmol/kg |
| Funktionalität (berechnet) | = 2 |

### Beispiel 2

| | |
|---|---|
| 400,00 g | Polyether A |
| 0,04 g | Dibutylzinnlaurat |
| 11,10 g | Polyisocyanat 4 |

Versuchsdurchführung wie in Beispiel 1

| | |
|---|---|
| NCO-Gehalt | = <0,01 % |
| OH-Zahl | = 14,3 mg KOH/g |
| Viskosität 25°C | = 8114 mPa.s |
| Doppelbindungsgehalt | = 63,5mmol/kg |
| Funktionalität (berechnet) | = 2 |

### Beispiel 3

Wie Beispiel 2, jedoch mit 0,01 g Dibutylzinnlaurat.

| | |
|---|---|
| NCO-Gehalt | = <0,01 % |
| OH-Zahl | = 14,4 mg KOH/g |
| Viskosität 25°C | = 8584 mPa.s |
| Doppelbindungsgehalt | = 62,0 mmol/kg |
| Funktionalität (berechnet) | = 2 |

### Beispiel 4

Wie Beispiel 3, jedoch mit

| | |
|---|---|
| 460,0 g | Polyether B |
| 16,0 g | Polyisocyanat 1 |

| | |
|---|---|
| NCO-Gehalt | = 0,05 % |
| OH-Zahl | = 47,6 mg KOH/g |
| Viskosität 25°C | = 4360 mPa.s |
| Doppelbindungsgehalt | = 11,0 mmol/kg |
| Funktionalität (berechnet) | = 6 |

### Beispiel 5

Wie Beispiel 4, jedoch mit

| | |
|---|---|
| 612,0 g | Polyether D |
| 25,0 g | Polyisocyanat 2 |

| | |
|---|---|
| NCO-Gehalt | = 0,08 % |
| OH-Zahl | = 38,8 mg KOH/g |
| Viskosität 25°C | = 7165 mPa.s |
| Doppelbindungsgehalt | = 26 mmol/kg |
| Funktionalität (berechnet) | = 4 |

### Beispiel 6

Wie Beispiel 5, jedoch mit

| | |
|---|---|
| 384,0 g | Polyether C |
| 20,0 g | Polyisocyanat 2 |

| | |
|---|---|
| NCO-Gehalt | = 0,01 % |
| OH-Zahl | = 48,2 mg KOH/g |
| Viskosität 25°C | = 7898 mPa.s |
| Doppelbindungsgehalt | = 12,0 mmol/kg |
| Funktionalität (berechnet) | = 10 |

### Beispiel 7

In einem 10L-Vierhalskolben, versehen mit Rührer, Thermometer, Tropftrichter, Kühler und Destillationsvorlage wurden:

| | |
|---|---|
| 4007,0 g | des Polyethers A |
| 73,0 g | Adipinsäure |
| 4,1 g | Methylsulfonsäure |

bei Raumtemperatur vorgelegt und bei 130°C gerührt. Dabei wurde Wasser abdestilliert. Nach 13,5 h Reaktion wurde ein Probe gezogen und analysiert. Der estermodifizierte Polyether wies folgende Werte auf:

| | |
|---|---|
| OH-Zahl | = 13,0 mg KOH/g |
| Säurezahl | = 0,87 mg KOH/g |
| pH-Wert | = 3,3 |
| Wassergehalt | = 0,01 %. |
| Viskosität 25°C | = 5314 mPa.s |
| Farbe | = farblos |
| Doppelbindungsgehalt | = 76,0 mmol/kg. |
| Funktionalität (berechnet) | = 2 |

### Beispiel 8

Wie Beispiel 7, jedoch mit

| | |
|---|---|
| 1714,0 g | des Polyethers D |
| 40,0 g | Adipinsäure |
| 0,23 g | Methylsulfonsäure |

Die Reaktion wurde 34 h bei 130°C und 12 h bei 150°C durchgeführt. Das erhaltene Produkt wies folgende Werte auf:

| | |
|---|---|
| OH-Zahl | = 36,3 mg KOH/g |
| Säurezahl | = 0,8 mg KOH/g |
| pH-Wert | = 4,4 |
| Wassergehalt | = 0,01 % |
| Doppelbindungsgehalt | = 33 mmol/kg. |
| Viskosität bei 25°C | = 2452 mPas |
| Funktionalität (berechnet) | = 4 |

### Beispiel 9

Wie Beispiel 6, jedoch mit

| | |
|---|---|
| 400 g | Polyethers A |
| 19,8 g | Polyether E |
| 0,11 g | (DBTL / Dibutylzinndilaurat |
| 26,2 g | Polyisocyanat 5 |

| | |
|---|---|
| NCO-Gehalt | = <0,01 % |
| Viskosität | = 9200 mPas |
| OH-Zahl | = 40,1 mg KOH/g |
| Doppelbindungsgehalt | = 58 mmol/kg. |
| Funktionalität (berechnet) | = 3 |

## Patentansprüche

1. Verfahren zur Herstellung von hydroxylgruppenhaltigen, durch Urethan- oder Estergruppen modifizierten Polyetherpolyolen mit einer Funktionalität von 2 bis 10, einem Molekulargewicht von 2.000 bis 32.000, einem Doppelbindungsgehalt von max. 76 mmol/kg und einer OH-Zahl von 10 - 80, dadurch gekennzeichnet, daß man n mol eines Ausgangspolyetherpolyols mit einer Funktionalität von 2 bis 8 und einer OH-Zahl von 28 - 400, ggf. in Gegenwart von Katalysatoren, mit mmol mindestens einer gegenüber Hydroxylgruppen reaktive Gruppen aufweisenden Verbindung der Funktionalität von 2 bis 3, ausgewählt aus:
a) Polyisocyanaten und
b) Polycarbonsäuren oder deren Anhydriden
bei 40 bis 200° C umsetzt, mit der Maßgabe, daß n und m so gewählt werden, daß sich für das modifizierte Polyetherpolyol die Funktionalität von 2 bis 10 einstellt.

2. Verfahren gemäß Anspruch 1, dadurch gekennzeichnet, daß die Reaktion der Ausgangspolyetherpolyole mit Polyisocyanaten sowohl diskontinuierlich in einem Reaktionsbehälter als auch kontinuierlich in einem Rohrreaktor durchgeführt wird, wobei das Ausgangspolyetherpolyol und das Polyisocyanat getrennt in den Rohrreaktor eingespeist werden, dem ein statischer Mischer vorgeschaltet ist.

3. Verfahren gemäß Anspruch 1, dadurch gekennzeichnet, daß die mindestens eine gegenüber Hydroxylfunktionen reaktive Gruppen aufweisenden Verbindungen
a) Di- oder Triisocyanate
b) Di- oder Tricarbonsäuren
sind.

4. Verfahren gemäß Anspruch 1, dadurch gekennzeichnet, daß die Ausgangspolyetherpolyole der Funktionalität 2 bis 8 eine OH-Zahl zwischen 28 und 200 aufweisen.

5. Verfahren gemäß Anspruch 1, dadurch gekennzeichnet, daß die Reaktion des Ausgangspolyetherpolyols mit den gegenüber Hydroxylfunktionen reaktive Gruppen aufweisenden Verbindungen
a) bei 40 bis 150°C, bevorzugt 60 bis 120°C (bei Polyisocyanaten),
b) bei 120 bis 200°C, bevorzugt 130 bis 180°C (bei Polycarbonsäuren),

## Claims

1. Process for the production of polyether polyols containing hydroxyl groups, modified by urethane or ester groups and having a functionality of 2 to 10, a molecular weight of 2000 to 32000, a double bond content of at most 76 mmol/kg and an OH value of 10-80, characterised in that n mol of a starting polyether polyol having a functionality of 2 to 8 and an OH value of 28-400 are reacted, optionally in the presence of catalysts, with m mol of at least one compound containing groups reactive towards hydroxyl groups of a functionality of 2 to 3, selected from among:
a) polyisocyanates and
b) polycarboxylic acids or the anhydrides thereof
at 40 to 200°C, with the proviso than n and m are selected in such a manner that the functionality of the modified polyether polyol is established at 2 to 10.

2. Process according to claim 1, characterised in that the reaction of the starting polyether polyols with polyisocyanates is performed both discontinuously in a reaction vessel and continuously in a tubular reactor, wherein the starting polyether polyol and the polyisocyanate are fed separately into the tubular reactor, upstream from which a static mixer is arranged.

3. Process according to claim 1, characterised in that the compounds containing at least one group reactive towards hydroxyl functions are
a) di- or triisocyanates
b) di- or tricarboxylic acids.

4. Process according to claim 1, characterised in that the starting polyether polyols of a functionality of 2 to 8 have an OH value of between 28 and 200.

5. Process according to claim 1, characterised in that the reaction of the starting polyether polyol with the compounds containing groups reactive towards hydroxyl groups is performed
a) at 40 to 150°C, preferably 60 to 120°C (with polyisocyanates),
b) at 120 to 200°C, preferably 130 to 180°C (with polycarboxylic acids).

## Revendications

1. Procédé pour la préparation de polyétherpolyols contenant des groupes hydroxyle, modifiés avec des groupes uréthane ou avec des groupes ester, possédant une fonctionnalité de 2 à 10, un poids moléculaire de 2.000 à 32.000, une teneur maximale en liaisons doubles de 76 mmoles/kg et un indice OH de 10 à 80, caractérisé en ce qu'on fait réagir n moles d'un polyétherpolyol de départ possédant une fonctionnalité de 2 à 8 et un indice OH de 28 à 400, le cas échéant en présence de catalyseurs, avec m moles d'au moins un composé présentant des groupes réactifs vis-à-vis de groupes hydroxyle, possédant une fonctionnalité de 2 à 3, choisis parmi le groupe comprenant:
a) des polyisocyanates et
b) des acides polycarboxyliques ou leurs anhydrides,
à une température de 40 à 200°C, avec cette mesure que l'on sélectionne les valeurs n et m de telle sorte que l'on obtient, pour le polyétherpolyol modifié, une fonctionnalité de 2 à 10.

2. Procédé selon la revendication 1, caractérisé en ce qu'on effectue la réaction des polyétherpolyols de départ avec des polyisocyanates aussi bien en discontinu dans un récipient de réaction qu'en continu dans un réacteur tubulaire, le polyétherpolyol de départ et le polyisocyanate étant introduits de manière séparée dans le réacteur tubulaire en amont duquel est monté un mélangeur statique.

3. Procédé selon la revendication 1, caractérisé en ce que les composés présentant au moins un groupe réactif vis-à-vis de fonctions hydroxyle représentent
a) des di- ou triisocyanates,
b) des acides di- ou tricarboxyliques.

4. Procédé selon la revendication 1, caractérisé en ce que les polyétherpolyols de départ, dont la fonctionnalité s'élève de 2 à 8, présentent un indice OH entre 28 et 200.

5. Procédé selon la revendication 1, caractérisé en ce qu'on effectue la réaction du polyétherpolyol de départ avec les composés présentant des groupes réactifs vis-à-vis de fonctions hydroxyle,
a) à une température de 40 à 150°C, de préférence de 60 à 120°C (pour les polyisocyanates),
b) à une température de 120 à 200°C, de préférence de 130 à 180°C (pour des acides polycarboxyliques).
